Europäisches Patentamt

European Patent Office

Office européen des brevets

(19)

(11) Numéro de publication: **0 230 833**
**B1**

(12) **FASCICULE DE BREVET EUROPEEN**

(45) Date de publication du fascicule du brevet:
07.02.90

(21) Numéro de dépôt: **86402900.4**

(22) Date de dépôt: **22.12.86**

(51) Int. Cl.⁴: **B60Q 1/26**

(54) **Feu de signalisation à plusieurs lampes pour véhicule automobile.**

(30) Priorité: **24.12.85 FR 8519156**

(43) Date de publication de la demande:
**05.08.87 Bulletin 87/32**

(45) Mention de la délivrance du brevet:
**07.02.90 Bulletin 90/6**

(84) Etats contractants désignés:
**DE ES**

(56) Documents cités:
**FR-A- 2 476 002**
**US-A- 3 763 456**

(73) Titulaire: **VALEO VISION, 17, rue Henri Gautier,
F-93012 Bobigny Cédex(FR)**

(72) Inventeur: **Dilouya, Gilbert, 8, quai de la Marne,
F-75019 Paris(FR)**

(74) Mandataire: **Martin, Jean-Jacques et al, Cabinet
REGIMBEAU 26, Avenue Kléber, F-75116 Paris(FR)**

## Description

La présente invention concerne d'une façon générale les feux de signalisation de véhicules automobiles, et concerne plus particulièrement un feu de signalisation conforme du préambule de la revendication 1, constitué par un ensemble de lampes associées à des éléments réfléchissants respectifs, toutes les lampes contribuant à l'obtention d'une même fonction lumineuse.

Un feu de signalisation de ce type, connu dans la technique antérieure, a été imaginé dans le but principal de réduire sa profondeur. En effet, les lampes à filament conventionnelles, de par le flux lumineux élevé qu'elles mettent en jeu, avec en conséquence une température élevée dans l'enceinte du feu, interdisent d'en diminuer excessivement le volume. En outre, le globe ou glace de fermeture d'un tel feu, en matière plastique, ne peut pas être rapproché de la lampe autant qu'on le souhaiterait, car il risque de s'échauffer excessivement et de fondre.

En revanche, un feu de signalisation de véhicule automobile constitué par plusieurs lampes de faible puissance et de dimensions réduites peut avoir une profondeur très faible, sans risque d'échauffement excessif, et une grande surface éclairante.

Sa faible profondeur permet de diminuer sensiblement son encombrement arrière par exemple dans le coffre à bagages du véhicule, au profit d'un accroissement de capacité de ce dernier. Elle permet en outre d'incorporer le feu dans une région de la caisse du véhicule où la place disponible en profondeur est limitée, comme une région relativement haute du hayon arrière dudit véhicule.

Cependant, le montage d'un feu de signalisation à plusieurs lampes est fastidieux. Une opération de câblage est en effet nécessaire pour relier électriquement, par exemple en parallèle, toutes les lampes entre elles, ainsi qu'avec la source d'alimentation extérieure, et il est parfois nécessaire également de fixer ensemble des éléments réfléchissants individuels.

On connaît en outre, en particulier par le brevet FR-A 2 518 317 et par le brevet U.S.-A 4 271 408 des dispositifs d'affichage ou de signalisation lumineuse constitués par un réseau de diodes électroluminescentes associées individuellement à des réflecteurs. Dans les dispositifs de ces deux brevets, un câblage important est nécessaire pour connecter les diodes électroluminescentes avec leur(s) source(s) d'alimentation électrique, cette connexion incluant en particulier de nombreux points de soudure à effectuer par exemple sur les pistes conductrices d'un substrat formant circuit imprimé.

La présente invention vise à pallier les inconvénients de l'art antérieur et à proposer un feu de signalisation, par exemple pour un véhicule automobile, qui comporte des moyens simplifiés pour la connexion électrique des lampes entre elles et avec une source d'alimentation extérieure. Un autre objet de l'invention est de proposer une structure modulaire, avec laquelle on puisse réaliser simplement et rapidement un feu comprenant des ensembles lampe/réflecteur en nombre quelconque.

A cet effet, la présente invention concerne un feu de signalisation pour véhicule, tel qu'un véhicule automobile, du type comprenant un ensemble de lampes, un ensemble de réflecteurs disposés en au moins une rangée et comportant chacun une douille pour le montage d'une lampe associée, et des moyens de connexion électrique des lampes avec une source d'alimentation extérieure, caractérisé en ce que les moyens de connexion électrique comprennent, pour chaque rangée, deux barres conductrices pour la connexion électrique en parallèle des lampes de ladite rangée avec la source d'alimentation extérieure, chaque barre comportant un ensemble de languettes souples saillantes engagées dans les douilles respectives et tenant lieu simultanément de surface de contact électrique pour les électrodes des lampes et de moyen de fixation de ladite barre sur les réflecteurs.

Dans une forme de réalisation de l'invention, les réflecteurs se présentent sous la forme d'éléments individuels, et sur les barres et sur des surfaces adjacentes des réflecteurs sont prévus des moyens de coopération mâle/femelle complémentaires, par exemple des doigts solidaires des barres conductrices et des trous complémentaires prévus dans les surfaces de base des réflecteurs, les barres assurant également de cette manière la fixation des réflecteurs les uns par rapport aux autres.

L'invention sera mieux comprise à la lecture de la description détaillée suivante de formes de réalisation préférées de celle-ci, donnée à titre d'exemple et faite en référence aux dessins annexés, sur lesquels :

- la figure 1 est une vue en perspective éclatée et partiellement arrachée d'un feu multilampes selon une première forme de réalisation de l'invention,
- la figure 2 est une vue partielle, en coupe longitudinale, du feu de la figure 1, après montage,
- la figure 3 est une vue partielle de l'arrière du feu de la figure 2,
- la figure 4 est une vue en perspective éclatée d'une partie d'un feu selon une seconde forme de réalisation de l'invention, et
- la figure 5 est une vue de face en coupe partielle, après montage du feu de la figure 4.

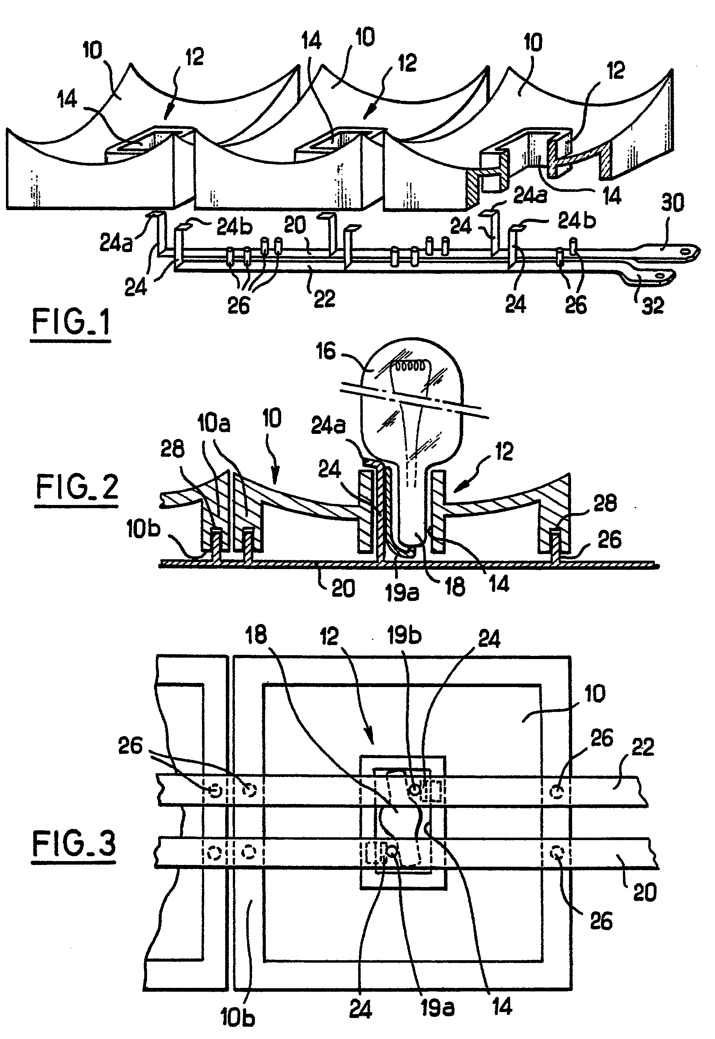

En référence aux figures 1 à 3, on va décrire une première forme de réalisation d'un feu de signalisation de véhicule automobile constitué par un ensemble de plusieurs lampes, disposées dans le cas présent en une seule rangée.

Dans le présent exemple de réalisation, le feu est constitué par trois lampes à filament (non représentées sur la figure 1) associées à trois éléments réfléchissants paraboliques 10 de contours rectangulaires. Les réflecteurs 10 sont initialement séparés les uns des autres. Ils seront obtenus avantageusement par moulage de matière plastique.

Au centre de chaque élément réfléchissant ou réflecteur 10 est formée une douille 12 comportant un passage traversant 14 apte à recevoir le culot de la lampe associée. Le passage 14 a une section de forme rectangulaire allongée, pour s'adapter au culot 18 en forme de lame mince d'une lampe à filament 16 dite "wedge-base" (voir figures 2 et 3). Le passage 14 est délimité par des parois droites se terminant du côté de la surface réfléchissante (en haut sur les figures 1 et 3) par un bord à angle vif.

Deux barres plates 20, 22, en métal conducteur, sont prévues pour assurer la connexion électrique entre les lampes et avec une source d'alimentation extérieure et, simultanément dans le présent exemple, la liaison mécanique des éléments réfléchissants 10 entre eux. Les barres 20 et 22 s'étendent parallèlement l'une à l'autre et parallèlement à la face postérieure (en bas sur la figure 2) des réflecteurs. Chaque barre comporte trois languettes souples de contact et de fixation 24 s'étendant sensiblement à angle droit par rapport à la direction longitudinale de la barre, et régulièrement espacées avec un pas approximativement égal à la largeur d'un réflecteur 10. Chaque languette souple de la barre 20 est apte à coopérer avec une première surface latérale du passage 14 de la douille 12 associée, à gauche sur les figures, et comporte à son extrémité libre un coude à angle droit 24a dirigé vers la gauche et tenant lieu de crochet coopérant avec l'arête supérieure adjacente de la douille (voir figure 2). De même, les languettes souples 24 de la barre 22 sont régulièrement espacées, du même pas, pour coopérer avec la surface latérale opposée de leur douille associée, et comportent à cet effet un coude à angle droit 24b, vers la droite, pour assurer avec l'arête supérieure adjacente de la douille une fonction d'accrochage. De préférence, les languettes 24 ont une longueur égale ou légèrement supérieure à la hauteur totale des passages 14; de cette manière, on supprime tout jeu (en direction verticale sur les figures 1 et 2) entre les barres et les réflecteurs. Comme le montre mieux la figure 3, les deux languettes 24 de chaque douille sont approximativement diagonalement opposées dans le passage 14, et leurs surfaces extérieures définissent deux surfaces de contact pour coopérer avec les électrodes 19a et 19b qui s'étendent le long du culot 18 de la lampe, depuis sa base, de la manière représentée.

Les barres comportent en outre, en saillie parallèlement aux languettes souples 24, des doigts 26 qui sont aptes, lorsque les barres 20, 22 sont mises en place, à s'engager dans des trous borgnes complémentaires 28 prévus dans des surfaces de base 10b, à l'extrémité libre des parois latérales 10a, des réflecteurs 10. En particulier, à un même réflecteur 10 sont associés sur chaque barre deux doigts 26 situés en regard des surfaces de base opposées, de part et d'autre de la languette 24.

Enfin chaque barre comporte, dans le présent exemple à son extrémité libre de droite, un plot de raccordement, respectivement 30 et 32, destiné à recevoir, par tout moyen de connexion approprié, la tension d'alimentation des lampes.

Le montage des barres 20 et 22 sur les réflecteurs 10 s'effectue en insérant les languettes souples 24 deux à deux dans les passages de douilles associés. A un stade intermédiaire de cette insertion, on provoque la déformation élastique desdites languettes souples, dont l'extrémité libre du coude est en appui contre la surface intérieure adjacente de la douille, pour que, en déplaçant les barres longitudinalement, les doigts 26 viennent s'aligner avec leurs trous 28. Le mouvement d'insertion se prolongeant (vers le haut sur la figure 1), les doigts 26 pénètrent dans leurs trous 28, et simultanément les extrémités libres des languettes 24 montent dans les passages 14 jusqu'à ce que les coudes 24a et 24b, respectivement, se rabattent par dessus les arêtes de bordure supérieure des douilles, du fait que les languettes 24 tendent à reprendre leur position orientée à angle droit par rapport à leur barre.

Cette opération de montage peut également s'effectuer en amenant les réflecteurs un à un sur les deux barres, préalablement disposées parallèlement l'une à l'autre avec un écartement correct, et en les encliquetant comme ci-dessus. Dans les deux cas, le montage est simple et rapide.

Ainsi, le montage des deux barres permet d'assurer simultanément, d'une manière extrêmement simple et rapide :
- la mise en place dans les douilles des contacts d'électrodes constitués par les surfaces extérieures des languettes 24;
- la liaison électrique en parallèle entre les lampes, par l'intermédiaire des deux barres conductrices 20 et 22;
- la liaison électrique de toutes les lampes avec une source d'alimentation extérieure, par les plots 30 et 32; et
- la liaison mécanique des barres avec les réflecteurs, par l'effet d'encliquetage sus-mentionné (aucun moyen de fixation supplémentaire n'étant à prévoir), et par voie de conséquence la liaison mécanique des ensembles réflecteur/lampe entre eux.

On peut noter ici que les doigts 26, en coopérant avec les trous 28, permettent de maintenir un écartement constant entre les deux barres conductrices 20 et 22, pour ainsi éviter tout risque de court-circuit.

On peut noter en outre que la mise en place des lampes dans les douilles de l'assemblage ainsi obtenu tient lieu de verrouillage des languettes 24 dans leur position, et par voie de conséquence de verrouillage de tout l'assemblage; plus précisément, en empêchant par cette mise en place la déformation élastique des languettes vers l'intérieur, on évite leur glissement accidentel vers le bas dans leur passage 14 et la désolidarisation de l'ensemble.

Bien entendu, on pourra donner à la structure de feu à plusieurs lampes ci-dessus un caractère modulaire. Plus précisément, en disposant de deux barres de grande longueur, on pourra sectionner chaque barre à la longueur choisie (par exemple aux emplacements de pontets sécables ou de zones de rupture privilégiée espacés au pas des réflecteurs) et utiliser des ensembles lampe/réflecteur en tout nombre souhaité, de la manière décrite ci-dessus.

Par ailleurs, dans le cas où un feu comportera deux ou plusieurs rangées parallèles de lampes, on prévoira deux barres conductrices par rangée, et l'on utilisera tout type de connexion approprié pour relier électriquement les groupes de lampes entre eux, en série ou en parallèle.

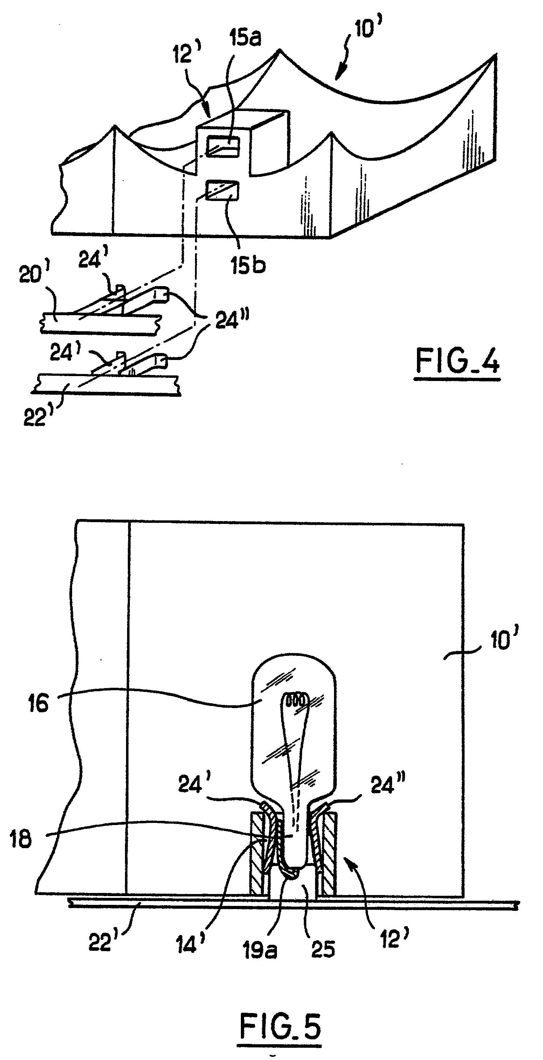

Sur les figures 4 et 5 est décrite une seconde forme de réalisation d'un feu multilampes selon la présente invention, dans laquelle les éléments réflecteurs sont d'un bloc et disposés en une rangée.

Chaque réflecteur du bloc 10 comporte une douille 12′ disposée dans la region du milieu d'un de ses bords, de telle sorte que les douilles soient régulièrement espacées, au pas des réflecteurs, le long de l'un des deux grands bords dudit bloc.

Chaque douille 12′ est constituée par une cavité sensiblement parallélépipédique 14′ ouverte sur le centre du réflecteur. Deux passages 15a et 15b s'étendent parallèlement dans une paroi séparant ladite cavité de l'extérieur du bloc.

Deux barres conductrices plates 20′, 22′ comportent, régulièrement espacés au pas des douilles 12′, des ensembles de connexion électrique et mécanique.

Chacun de ces ensembles comprend deux languettes de contact et de fixation sensiblement parallèles 24′ et 24″ dont les premières extrémités sont fixées de part et d'autre d'une patte 25 qui est solidaire de la barre et qui s'étend perpendiculairement à cette dernière pour pouvoir pénétrer dans le passage 15a ou 15b associé. Les extrémités libres des deux languettes sont incurvées de manière à s'éloigner l'une de l'autre comme représenté.

La longueur des languettes 24′ et 24″ est choisie de manière à ce que leurs extrémités libres viennent coopérer en appui avec les arêtes du bord supérieur de la cavité 14′, tout en conservant un état de cintrage à l'intérieur de ladite cavité, comme illustré sur la figure 5. De cette manière, on assure d'une part la fixation en place par encliquetage de la barre conductrice associée, et d'autre part une fonction de rétention du culot 18 de la lampe 16 lorsque cette dernière est mise en place, du fait que la déformation élastique alors imprimée aux languettes provoque de leur part une force de rappel qui contribue à serrer le culot.

Du fait que tous les réflecteurs sont initialement solidaires entre eux, les doigts 26 prévus dans la forme de réalisation de la figure 1 deviennent superflus, et ont été omis. A cet égard, les deux barres 20′ et 22′ sont ici maintenues convenablement écartées l'une de l'autre grâce au fait que leurs languettes respectives sont insérées dans deux passages distincts 15a et 15b des douilles 12.

Dans ce second exemple/de réalisation, les barres conductrices telles que décrites remplissent les fonctions suivantes : elles définissent, par l'intermédiaire des languettes 24′ et 24″, les surfaces de contact pour les électrodes des lampes; elles assurent la connexion électrique en parallèle des lampes entre elles et avec une source d'alimentation, et elles restent fixées spontanément en position après leur mise en place grâce à l'action des languettes 24′ et 24″ dans les cavités 14 des douilles.

De même que dans la première forme de réalisation, le fait de mettre en place les lampes dans leurs douilles provoque le verrouillage de l'ensemble en position assemblée, du fait que les languettes de contact et de fixation ne peuvent plus alors se dégager de leur cavité 14. L'insensibilité du montage aux vibrations est ainsi notablement accrue.

Bien que l'on ait représenté sur certaines des figures le feu en position couchée, il est clair que celui-ci occupera dans la majorité des cas une position droite, dans laquelle les axes optiques respectifs de chacun des ensembles lampe/réflecteur s'étendent sensiblement horizontalement.

En outre, il apparaît que dans les deux exemples de réalisation décrits, les barres conductrices sont identiques l'une à l'autre (à l'exception des plots de raccordement), à un retournement de 180° près. Ainsi, un seul outillage pourra être prévu pour la fabrication des deux barres.

On n'a pas représenté sur les figures le globe ou glace de fermeture du feu. Il est clair que ce dernier pourra être disposé à grande proximité des lampes et des réflecteurs, sans risque d'échauffement excessif, du fait que le flux lumineux produit est sensiblement plus réparti qu'avec les feux à un seul filament. La profondeur du feu obtenu sera donc avantageusement faible, avec les avantages inhérents tels qu'indiqués plus haut. On pourra bien entendu munir cette glace de fermeture de tout moyen de diffusion et/ou dispersion de la lumière par diffraction, tel que des stries ou des billes.

Il est clair que l'homme de l'art pourra prévoir tout aménagement complémentaire, notamment pour assurer un verrouillage des culots des lampes dans leurs douilles, pour la fixation du feu sur un support du véhicule, pour le guidage des culots des lampes dans les douilles, etc.

En outre, chaque barre conductrice et les languettes associées insérées dans les culots des lampes, et éventuellement les doigts coopérant avec les réflecteurs, pourront être réalisés d'une pièce par des étapes simples de découpage (par exemple par estampage) et de pliage d'une feuille métallique d'épaisseur appropriée. Par exemple, les languettes pourront être obtenues par pliage à 90° d'appendices latéraux formés en des emplacements appropriés de chacune des barres.

L'homme de l'art pourra cependant utiliser toute autre technique pour réaliser, sous forme d'un corps électriquement conducteur unique, des barres munies des languettes d'accrochage et de contact et de tous les autres aménagements indiqués dans la description.

**Revendications**

1 - Feu de signalisation pour véhicule, tel qu'un véhicule automobile, du type comprenant un ensemble de lampes (16), un ensemble de réflecteurs (10,10′) disposés en au moins une rangée et comportant chacun une douille (12,12′) pour le montage d'une lampe associée, et des moyens de connexion électrique des lampes avec une source d'alimentation extérieure, caractérisé en ce que les moyens de connexion électrique comprennent, pour chaque rangée, deux barres conductrices (20, 22; 20′, 22′) pour la connexion électrique en parallèle des lampes de ladite rangée avec la source d'alimentation extérieure, chaque barre comportant un ensemble de languettes souples saillantes (24, 24′, 24″) engagées dans les douilles respectives et tenant lieu similtanément de surface de contact électrique pour les électrodes (19a, 19b) des lampes et de moyen de fixation de ladite barre sur les réflecteurs.

2 - Feu de signalisation selon la revendication 1, caractérisé en ce que les réflecteurs (10) se présentent sous la forme d'éléments individuels, et en ce que sur les barres (20, 22) et sur des surfaces adjacentes (10b) des réflecteurs sont prévus des moyens de coopération mâle/femelle complémentaires (26, 28), les barres assurant également de cette manière la fixation des réflecteurs (10) les uns par rapport aux autres.

3 - Feu de signalisation selon la revendication 2, caractérisé en ce que les moyens de coopération mâle/femelle comprennent des doigts (26) solidaires des barres conductrices et des trous complémentaires (28) prévus dans les surfaces de base (10b) des réflecteurs.

4 - Feu de signalisation selon l'une quelconque des revendications 2 et 3, caractérisé en ce que les barres conductrices (20, 22) sont réalisées par sectionnement à une longueur appropriée de barres de grande longueur.

5 - Feu de signalisation selon l'une quelconque des revendications 1 à 4, caractérisé en ce que chaque douille (12) définit un passage traversant (14), chaque languette (24) étant souple et comportant à son extrémité libre un coude (24a, 24b) coopérant avec le bord d'extrémité dudit passage opposé à la barre, la longueur des languettes étant égale ou légèrement supérieure à la hauteur du passage traversant.

6 - Feu de signalisation selon l'une quelconque des revendications 1 à 4, caractérisé en ce que chaque douille (12') comporte une cavité (14') et deux passages traversants (15a, 15b) entre la cavité et les barres conductrices (20', 22'), chaque languette (24', 24'') étant souple et étant recourbée à son extrémité libre pour coopérer avec le bord d'extrémité de ladite cavité, la longueur des languettes étant telle qu'elles prennent dans la cavité un état cintré.

7 - Feu de signalisation selon la revendication 6, caractérisé en ce que chaque barre (20', 22') comporte, en association avec chaque douille (12'), deux languettes (24a, 24b) sensiblement parallèles de courbures opposées, coopérant respectivement avec deux surfaces opposées de ladite cavité.

8 - Feu de signalisation selon l'une quelconque des revendications 5 à 7, caractérisé en ce que, lorsque les lampes (16) sont mises en place dans leurs douilles, leurs culots (18) exercent une action de verrouillage sur les languettes (24, 24', 24'') pour les empêcher de se dégager de leur passage de douille (14; 14') associé.

**Patentansprüche**

1. Leuchte für Fahrzeuge, wie z.B. ein Kraftfahrzeug, von der Art, die eine Lampeneinheit (16), eine Reflektoreinheit (10, 10') enthält, welche in wenigstens einer Reihe angeordnet sind und jeweils eine Fassung (12, 12') für den Einbau einer entsprechenden Lampe sowie Mittel für den elektrischen Anschluß der Lampen an eine äußere Stromquelle enthalten, dadurch gekennzeichnet, daß die elektrischen Anschlußmittel für jede Reihe zwei Stromschienen (20, 22; 20', 22') für die elektrische Parallelschaltung der Lampen der genannten Reihe mit der äußeren Stromquelle aufweisen, wobei jede Schiene eine aus vorspringenden elastischen Zungen (24, 24', 24'') bestehende Einheit enthält, welche in die entsprechenden Fassungen eingreifen und gleichzeitig als elektrische Kontaktfläche für die Elektroden (19a, 19b) der Lampen und als Befestigungsmittel für die genannte Schiene and den Reflektoren dienen.

2. Leuchte nach Anspruch 1, dadurch gekennzeichnet, daß die Reflektoren (10) die Form einzelner Elemente haben und daß an den Schienen (20, 22) und an angrenzenden Flächen (10b) der Reflektoren einander ergänzende Außen-/Innen-Eingriffselemente (26, 28) vorgesehen sind, während die Schienen auf diese Weise auch die Befestigung der Reflektoren (10) aneinander gewährleisten.

3. Leuchte nach Anspruch 2, dadurch gekennzeichnet, daß die Außen-/Innen-Eingriffselemente fest mit den Stromschienen verbundene Finger (26) sowie ergänzende Löcher (28) enthalten, die in den Grundflächen (10b) der Reflektoren vorgesehen sind.

4. Leuchte nach einem der Ansprüche 2 und 3, dadurch gekennzeichnet, daß die Stromschienen (20, 22) durch Abtrennung auf eine große geeignete Schienenlänge hergestellt werden.

5. Leuchte nach einem der Ansprüche 1 bis 4, dadurch gekennzeichnet, daß jede Fassung (12) eine Durchtrittsöffnung (14) definiert, wobei jede Zunge (24) elastisch ausgeführt ist und am freien Ende eine Krümmung (24a, 24b) aufweist, die mit der Abschlußkante der genannten Durchtrittsöffnung, die der Schiene gegenüberliegt, zusammenwirkt und wobei die Länge der Zungen gleich der Höhe der Durchtrittsöffnung oder geringfügig größer ist.

6. Leuchte nach einem der Ansprüche 1 bis 4, dadurch gekennzeichnet, daß jede Fassung (12') einen Hohlraum (14') und zwei Durchtrittsöffnungen (15a, 15b) zwischen dem Hohlraum un den Stromschienen (20', 22') aufweist, während jede Zunge (24', 24'') elastisch und am freien Ende so gekrümmt ist, daß sie mit der Abschlußkante des genannten Hohlraums zusammenwirken kann, wobei die Länge der Zungen so beschaffen ist, daß sie in dem Hohlraum eine gebogene Stellung einnehmen.

7. Leuchte nach Anspruch 6, dadurch gekennzeichnet, daß jede Schiene (20', 22') in Verbindung mit jeder Fassung (12') zwei Zungen (24a, 24b) aufweist, die im wesentlichen parallel zu gegenüberliegenden Krümmungen verlaufen und jeweils mit zwei einander gegenüberliegenden Flächen des genannten Hohlraums zusammenwirken.

8. Leuchte nach einem der Ansprüche 5 bis 7, dadurch gekennzeichnet, daß, wenn die Lampen (16) in die Fassungen eingesetzt sind, ihre Sockel (18) eine Verriegelungswirkung auf die Zungen (24, 24', 24'') ausüben, so daß sich diese nicht aus dem entsprechenden Fassungsdurchtritt (14; 14') lösen können.

**Claims**

1. A lighting unit for a vehicle, for example an automotive vehicle, of the type comprising a group of light bulbs (16), a group of reflectors (10, 10') disposed in at least one array and each including a socket (12, 12') for mounting an associated light bulb, and electrical connection means for connecting the light bulbs with an external source of supply, characterised in that the electrical connecting means comprise, for each array, two conductive bus bars (20, 22; 20', 22') for connecting light bulbs of the said array in parallel with the external source of supply, each bus bar having a group of projecting, flexible tongues (24, 24', 24") engaged in the respective sockets and at the same time providing an electrical contact surface for the electrodes (19a, 19b) of the light bulbs and fixing means for securing the said bus bar on the reflectors.

2. A lighting unit according to Claim 1, characterised in that the reflectors (10) are in the form of individual elements, and in that, on the bus bars (20, 22) and on the adjacent surfaces (10b) of the reflectors, complementary male/female cooperating means (26, 28) are provided, whereby the reflectors (10) are secured to each other by the bus bars.

3. A lighting unit according to Claim 2, characterised in that the male/female cooperating means comprise fingers (26) which are fixed with respect to the conductive bus bars, together with complementary holes (28) which are provided in the base surfaces (10b) of the reflectors.

4. A lighting unit according to either one of Claims 2 and 3, characterised in that the conductive bus bars (20, 22) are formed by cutting bars of substantial length to an appropriate length.

5. A lighting unit according to any one of Claims 1 to 4, characterised in that each socket (12) defines a through opening (14), each tongue (24) being flexible and comprising at its free end a bent out tab (24a, 24b) cooperating with the edge of the said opening which is at the end of the latter opposite to the edge nearest the bus bar, the length of the tongues being equal to or slightly greater than the height of the through opening.

6. A lighting unit according to any one of Claims 1 to 4, characterised in that each socket (12') includes a cavity (14') and two through openings (15a, 15b) between the cavity and the conductive bus bars (20', 22'), each tongue (24', 24") being flexible and being curved back at its free end so as to cooperate with the terminal edge of the said cavity, the length of the tongues being such that they assume a bent condition within the cavity.

7. A lighting unit according to Claim 6, characterised in that each bus bar (20', 22') includes, in association with each socket (12'), two tongues (24a, 24b) which are substantially parallel to each other and which have opposed curvatures, cooperating respectively with two opposed surfaces of the said cavity.

8. A lighting unit according to any one of Claims 5 to 7, characterised in that, when the light bulbs (16) are inserted in their sockets, their caps (18) exert a locking action on the tongues (24, 24', 24"), whereby to prevent them from becoming disengaged from their associated socket opening (14; 14').

FIG.1

FIG.2

FIG.3

FIG_4

FIG.5